# EUROPEAN PATENT SPECIFICATION

(11) **EP 3 308 107 B1**
(45) Date of publication and mention of the grant of the patent: **03.04.2019**
(21) Application number: 16729237.4
(22) Date of filing: 08.06.2016
(51) Int. Cl.: G01D 5/245

(54) **POSITIONAL ENCODER**
POSITIONSCODIERER
CODEUR DE POSITION

(30) Priority: 11.06.2015 EP 15305895
(43) Date of publication of application: 18.04.2018
(73) Proprietor: Vishay MCB Industrie, 53200 Château-Gontier (FR)
(72) Inventor: BELLANGER, Jean-Luc, 53200 Château-Gontier (FR); GAUME, Willy, 53230 Cossé le Vivien (FR)
(74) Representative: Manitz Finsterwald Patent- und Rechtsanwaltspartnerschaft mbB
(86) International application number: PCT/EP2016/063022
(87) International publication number: WO 2016/198445

(56) References cited:
- EP-A1- 1 980 824
- EP-A2- 2 711 671
- DE-U1-202004 020 155
- US-A- 5 012 238
- US-A1- 2011 316 530

## Description

The present invention relates to a positional encoder, in particular to a preferably magnetic positional encoder for measuring position-related figures. An example of such a positional encoder is a rotary encoder for measuring angle-related figures such as an angular position of a shaft relative to a reference position. Another example of a positional encoder is a linear encoder for measuring linear displacements. Positional encoders are generally known and typically comprise a moveable member and at least a first and a second sensor, wherein the moveable member is moveable relative to the first and second sensors. The first sensor is adapted to capture a first component of a current position of the moveable member and to output a first signal corresponding to the first component, which is typically a sine component of the position. The second sensor is adapted to capture a second component of the current position complementary to the first component and to output a second signal corresponding to the second component, which is typically a cosine component of the position. The second component is in so far complementary to the first component as, while the current positional, e.g. angular or linear, value might not be sufficiently defined by the first or second component alone, the first and second components together comprise sufficient information to deduce the current positional value. Therefore, from the pair of first and second components, a positional value can be evaluated, e.g. by generally known trigonometric methods. In case of a magnetic positional encoder, the moveable member comprises at least one magnetic element with a plurality of opposite magnetic poles and the first and second sensors are magnetic sensors such as Hall sensors.

Generally there are two types of positional encoders: absolute encoders on the one hand and incremental encoders on the other. An absolute positional encoder directly determines the position of the moveable member as an absolute value. In contrast, an incremental encoder only captures incremental positional values relative to some reference position which might be unknown and has then to be determined otherwise. An incremental encoder, however, usually has a higher resolution in comparison to a similar absolute encoder. This is because the incremental encoder usually captures only part of the full measuring range. Hence, if the full measuring range can be captured by an absolute encoder with a certain resolution, the overall resolution can be multiplied by dividing the measuring range into multiple sections each individually being captured by an incremental encoder with a similar resolution.

EP 2 711 671 A2 discloses a device for measuring a position with a code carrier that is provided with a first pitch track and a second pitch track. First and second detector arrays are used for generating first and second position signals by scanning the pitch tracks in a measuring direction. First and second position processing units are used for processing the first and second position signals to first and second absolute positions. An absolute auxiliary position value is initialized and is fed to the second position processing unit from the first position processing unit.

EP 1 980 824 A1, US 2011 316 530 A1, US 5 012 238 A, and DE 20 2004 020155 U1 disclose further technological background information.

A special embodiment of a positional encoder is a combined absolute and incremental positional encoder for measuring an absolute position with high precision. Such an encoder works in a twofold manner. On the one hand, a first positional encoder assembly as described above is employed for measuring an absolute position with coarse precision. On the other hand, a second positional encoder assembly, which may be integrated into the first assembly, is employed for measuring an incremental position with high precision. Combining the measurements by using the measured absolute value as a reference position for the measured incremental value yields a positional value which represents the absolute position with high precision. This twofold measurement can be carried out more efficiently compared to a direct measurement of the absolute position with a purely absolute positional encoder of high precision. An example of such a combined absolute and incremental positional encoder is described in EP 2 711 663 A1, wherein the positional encoder is a rotary encoder.

A general problem of high-precision positional encoders as described above is that the calculation of the absolute and incremental positional values from the respect-tive first and second signals and/or of the combined high-resolution positional value from these intermediate results as well as subsequent post-processing steps, e.g., linearity corrections, require significant computing resources. This is so even when efficient algorithms, e.g. CORDIC (Coordinate Rotation Digital Computer) algorithms, are used. Typically, the necessary computing steps are carried out on standard microprocessors, e.g. FPGAs (Field Programmable Gate Arrays), with fixed microcode. However, the more such computing resources are used, the less reliable the positional encoder becomes. Moreover, the layout and design of the computing resources as well as the resources as such add to production costs of the positional encoder.

Hence, it is an object of the invention to provide a positional encoder capable of measuring a position with high precision and improved reliability.

The object of the invention is achieved by a positional encoder according to claim 1. An inventive positional encoder comprises a moveable member and at least a first and a second sensor, wherein the moveable member is moveable relative to the first and second sensors. The first sensor is adapted to capture a first component of a current position of the moveable member and to output a first signal corresponding to the first component. Accordingly, the second sensor is adapted to capture a second component of the current position and to output a second signal corresponding to the second component. The second component is complementary to the first component. The positional encoder further comprises at least a first memory unit holding a plurality of predetermined look-up values, each predetermined look-up value representing a positional value which corresponds to a respective set of at least the first and second signals and being associated with an individual memory address which is formed by concatenating the signals of the respective set. The first memory unit is configured to receive a memory address which is formed by concatenating at least the first and second signals outputted by the first and second sensors, respectively, and to output the predetermined look-up value associated with the received memory address in response. Preferably, each predetermined look-up value of the first memory represents a positional value which corresponds to a respective pair of the first and second signals and is associated with an individual memory address which is formed by concatenating the first and second signals of the respective pair, wherein the first memory unit is configured to receive a memory address which is formed by concatenating the first and second signals outputted by the first and second sensors, respectively.

The movable member is preferably connected or connectable to an object whose movement is to be measured. In principle, many different kinds of motion can be assessed in this way. However, the movable member can be restricted to movements of particular type, direction and/or range. For example, in case of the positional encoder being a linear encoder, the movable member can be displaceable only linearly within a limited range. Or, in case the positional encoder is a rotary encoder, the movable member can be rotatable about an axis with or without angle limits.

As stated previously, the first component is typically the sine component and the complementary second component is the cosine component of the current position of the moveable member. Hence, the first and second sensors need to be arranged relative to the moveable member such that the sensors deliver the required components. For example, in case the positional encoder is a rotary encoder, the moveable member is a rotary member and the first and second sensors are preferably arranged at a circumference of the rotary member at an angle of 90 degrees with respect to one another. However, other arrangements of the sensors and other relations of the first and second components are possible as long as the first and second components complement each other such that the position is unambiguously derivable from both components together. If the positional encoder is a rotary encoder, the rotary member is preferably formed by a flat circular disk which is attachable, e.g., to a shaft an angular position of which is to be measured by means of the rotary encoder.

The main purpose of the first memory unit is to effectively substitute those aforementioned computing resources which are employed for evaluating a positional value based on the first and second signals. The first memory unit basically serves as a look-up table of predetermined values. Each of these predetermined look-up values represents a positional value which has been calculated from respective first and second signals essentially in the same way it would otherwise be computed every time anew by said computing resources. Particularly, for every possible or at least reasonable set of signals outputted by the sensors the corresponding look-up value is readily accessible in said first memory. For accessing a particular look-up value in dependence on a respective set of signals, each look-up value is associated with an individual memory address formed by concatenating the signals of this set. In this context, concatenation of the signals refers to a combination of the signals which results in a unique memory address, i.e. different sets of signals lead to different memory addresses. In particular, the signals of a respective set of at least the first and second signals (preferably digital representations thereof) directly form or are translated to respective memory address parts (which in the case of a set being a pair of a first signal and a second signal, can be regarded as a "high" and a "low" memory address part), wherein the memory address corresponding to this set is composed of (at least) these memory address parts, e.g. by simple sequential chaining. Upon reception of such a memory address, which links the set of signals to the corresponding positional value in a defined manner, the memory unit outputs the predetermined look-up value representing this positional value. The memory unit is therefore adapted to substitute the otherwise required computational means.

By effectively omitting any calculation for generating the output signals of the positional encoder and by storing the necessary calculation results as predetermined look-up values in the memory unit(s) instead, the reliability and efficiency of the positional encoder is increased. As the person skilled in the art will notice, a calculation as such is generally more error-prone than reading the correct calculation result from a memory. Also, it is more efficient to perform a calculation only once and store the value instead of repeating the calculation each time the value is required. When using a positional encoder, an individual position usually shows up many times. Thus, it is particularly useful that an individual positional value, which should be outputted whenever the corresponding position shows up, is only calculated once and just needs to be read out from a memory unit when the positional value is to be outputted.

Beneficial embodiments of the invention are specified in the dependent claims, the description and the drawings.

According to a preferred embodiment, the positional encoder further comprises at least a third and a fourth sensor, wherein the moveable member is moveable relative to the first, second, third and fourth sensors. The first sensor is adapted to capture a first component of a current absolute position of the moveable member and to output a first absolute signal corresponding to the first component of the current absolute position. Correspondingly, the second sensor is adapted to capture a second component of the current absolute position and to output a second absolute signal corresponding to the second component of the current absolute position. The second component is complementary to the first component of the current absolute position. The third sensor is adapted to capture a first component of a current incremental position of the moveable member and to output a first incremental signal corresponding to the first component of the current incremental moveable position. The fourth sensor is adapted to capture a second component of the current incremental position complementary to the first component of the current incremental position and to output a second incremental signal corresponding to the second component of the current incremental position. Hence, the positional encoder of this embodiment is a combined absolute and incremental positional encoder, which can be used to measure a positional value with high precision by combination of a coarse absolute measurement with a high resolution incremental measurement.

In this embodiment, the first memory unit is configured to receive a memory address which is formed by at least one of concatenating the first and second absolute signals outputted by the first and second sensors, respectively, and concatenating the first and second incremental signals outputted by the third and fourth sensors, respectively. In other words, the memory address is formed by at least one pair of first and second signals, wherein the at least one pair corresponds either to the absolute or the incremental position of the moveable member. In this way, the first memory unit of the combined absolute and incremental positional encoder serves to evaluate either an absolute positional value from the first and second absolute signals or an incremental positional value from the first and second incremental signals.

Alternatively, the first memory unit serves to directly evaluate an (overall) positional value from all four signals at once. In this embodiment, each predetermined look-up value of the first memory unit represents a positional value which corresponds to a respective set of at least the first, second, third and fourth signals and is associated with an individual memory address which is formed by concatenating at least the first, second, third and fourth signals of the respective set. The first memory unit is then configured to receive a memory address which is formed by concatenating at least the first, second, third and fourth signals outputted by the first, second, third and fourth sensors, respectively, and to output the predetermined look-up value associated with the received memory address in response.

According to another embodiment, each predetermined look-up value of the first memory unit represents an (absolute) positional value which corresponds to a respective pair of the first and second absolute signals and is associated with an individual memory address which is formed by concatenating the first and second absolute signals of the respective pair, wherein the first memory unit is configured to receive a memory address which is formed by concatenating the first and second absolute signals outputted by the first and second sensors, respectively. The positional encoder further comprises at least a second memory unit which is in so far functionally essentially identical to the first memory as it holds a plurality of predetermined look-up values, each predetermined look-up value representing an (incremental) positional value which corresponds to a respective pair of the first and second incremental signals and being associated with an individual memory address which is formed by concatenating the first and second incremental signals of the respective pair. The second memory unit is configured to receive a memory address which is formed by concatenating the first and second incremental signals outputted by the third and fourth sensors, respectively, and to output the predetermined look-up value associated with the received memory address in response. In this embodiment, a pair of first and second absolute signals and a pair of first and second incremental signals are assigned to different respective memory units, each of which comprises a look-up table for outputting the corresponding absolute and incremental positional values, respectively.

As an alternative to the above embodiment, the positional encoder comprises at least a second memory unit holding a plurality of predetermined look-up values, each predetermined look-up value representing a positional value which corresponds to a respective triple of the predetermined look-up value outputted by the first memory unit and the first and second signals not forming the memory address received by the first memory unit, each predetermined look-up value further being associated with an individual memory address which is formed by concatenating the predetermined look-up value and the first and second signals of the respective triple. The second memory unit is configured to receive a memory address which is formed by concatenating the predetermined look-up value outputted by the first memory unit and the first and second signals not forming the memory address received by the first memory unit and to output the predetermined look-up value associated with the received memory address in response.

Similarly to the preceding embodiment, in this embodiment the positional encoder also is a combined absolute and incremental positional encoder and comprises two memory units. In contrast to the preceding embodiment, however, the first and second memory units are not arranged in parallel to receive memory addresses formed by the absolute and incremental signals, respectively. Instead, the memory units are arranged sequentially such that the second memory unit receives a memory address which is formed by the predetermined look-up value outputted by the first memory unit on the one hand and by the first and second signals not forming the memory address received by the first memory unit on the other hand. Hence, the first and second absolute signals enter the first memory unit and the first and second incremental signals (together with the look-up value outputted by the first memory unit) enter the second memory unit, or vice versa.

As another improvement to the embodiment with the first and second memory units being arranged in parallel, the positional encoder further comprises at least a third memory unit holding a plurality of predetermined look-up values, each predetermined look-up value representing a positional value which corresponds to a respective pair of the predetermined look-up value outputted by the first memory unit and the predetermined look-up value outputted by the second memory unit and being associated with an individual memory address which is formed by concatenating the predetermined look-up value outputted by the first memory unit and the predetermined look-up value outputted by the second memory unit of the respective pair. The third memory unit is configured to receive a memory address which is formed by concatenating the predetermined look-up value outputted by the first memory unit and the predetermined look-up value outputted by the second memory unit and to output the predetermined look-up value associated with the received memory address in response.

In this embodiment, the first and second memory units are arranged in parallel to receive the first and second absolute signals and the first and second incremental signals as memory addresses, respectively, and to output corresponding predetermined look-up values representing absolute and incremental positional values, respectively. The third memory unit is arranged downstream to both the first and second memory units to receive a memory address formed by a pair of predetermined look-up values outputted by the first and second memory units so that the received memory address comprises information on both the absolute and incremental positional values determined by means of the first and second memory units, respectively. Therefore, by means of the third memory unit all the measured information about the position of the moveable member - i.e. the absolute and incremental positional information obtained by the first and second sensors and by the third and fourth sensors, respectively - is finally combined and translated into a positional value of high precision by retrieving the corresponding predetermined look-up value stored in the third memory at the respective memory address. This embodiment is particularly beneficial as will become apparent further below.

The positional encoder of any of the embodiments described herein is in particular configured as a rotary encoder. Consequently, the moveable member is a rotary member rotatable relative to respective sensors of the encoder, wherein the sensors are adapted to capture respective components of current angular positions of the rotary member and to output corresponding signals. The general functioning of a respective memory unit, namely to receive memory addresses formed by concatenating the signals and to output a predetermined look-up value associated with the received memory address in response, remains the same as described for a general positional encoder, wherein, of course, each predetermined look-up value held by a respective memory unit then represents an angular value. According to a preferred embodiment, the first and second sensors are magnetic sensors and the moveable member comprises a first magnetic element having a number of magnetic poles evenly arranged along an extension of the moveable member, the first and second sensors being configured to cooperate with the first magnetic element. Said extension of the moveable member is in particular defined by its geometry. Especially, said extension is defined by a respective path along the moveable member which is followed by said sensors during movement of the moveable member relative to the sensors. For example, in case of a linear encoder the moveable member may have an elongated form the length of which corresponds to said extension, whereas in case of a rotary encoder the extension of the moveable member, which may be, e.g., a circular disk, can be defined by a circumferential contour of the moveable member.

In case of the positional encoder being a rotary encoder, the moveable member preferably comprises two magnetic poles diametrically opposed with respect to a rotary axis of the moveable member. The first magnetic element can thus be a magnetic dipole preferably formed as a circular disk, wherein the border between the poles extends along a diameter of the disk.

Regardless of the type of positional encoder, the magnetic sensors can be Hall sensors or any other sensor capable of measuring the intensity and/or preferably the orientation of a magnetic field. As the person skilled in the art will notice, the type of sensor should generally be suitable to distinguish at least between different regions, e.g. two diametrically divided regions of the moveable member so that the absolute position can be measured by means of the first and second sensors. Therefore, the sensors are not necessarily magnetic sensors, but could also be for instance optical sensors. In this case, the moveable member preferably comprises an optically coded area, wherein the poles are distinguished by different reflectivities, transmissivities, light intensities, colors or other optical characteristics. According to another preferred embodiment, the third and fourth sensors are magnetic sensors and the moveable member comprises a second magnetic element having a number of magnetic poles evenly and preferably alternately arranged along an extension of the moveable member, the third and fourth sensors being configured to cooperate with the second magnetic element. In particular, the second magnetic element can comprise at least 8 and/or up to 90, preferably at least 16 and/or up to 72, in particular at least 32 and/or up to 52 pairs of magnetic poles, which in case of a rotary encoder are preferably symmetrically arranged around a rotary axis of the moveable member. These numbers are especially advantageous with regard to resolution on the one hand and spatial constraints on the other.

The first and second magnetic elements are preferably attached to the moveable member, so that the first and second magnetic elements are not moveable relative to each other.

According to another preferred embodiment, the positional encoder comprises at least one analog-to-digital converter configured to receive an analog representation of one of the first and second signals and to output a digital representation of the received signal. In particular, each sensor can be assigned to an analog-to-digital converter for digitizing analog signals of the sensor. The resulting digital representation of a respective analog signal can then readily form part of the memory address to be received by a memory unit of the positional encoder. An analog-to-digital converter can be integrated into a respective sensor or placed separately between the sensor and the memory unit to which the digitized signal is to be inputted. The number of Bits (word length) used for quantization of different analog signals may vary. For example, the word length of the digital-to-analog converter for digitizing the first and second absolute signals can be less than for digitizing the first and second incremental signals, e.g. 8 and 12 bit, respectively. According to another preferred embodiment, the positional encoder comprises at least one digital-to-analog converter configured to receive a digital representation of at least one of the predetermined look-up values and to output an analog representation of the received look-up value. In particular, the look-up value outputted by the "last" (with regard to the data flow) memory unit, e.g. the third memory unit, is transformed to an analog representation outputted to processing stages subsequent to the positional encoder. Alternatively or in addition, the outputted digital look-up values can be fed directly into known processing modules, e.g. an SSI (Synchronous Serial Interface) converter or an A/B Z converter.

According to another preferred embodiment, at least one of the memory units is further configured to output a tolerance flag as part of the outputted predetermined look-up value. The tolerance flag, which preferably is a single bit, is provided for indicating whether the outputted predetermined look-up value corresponds to a set of signals, in particular a pair of first and second signals, within a tolerance region. Such a tolerance flag is particularly beneficial when the positional value corresponding to a pair of first and second signals is constrained to a deterministic behavior. For example, if the first and second signals are complementary sine and cosine signals referring to the same position (especially a same angle) of the moveable member, the sum of the squares of the signals, i.e. the radius of the circle described by the signal pair, should ideally be constant (and equal to one for normalized values). However, due to several influence factors, such as temperature drift, electronic noise and measurement errors, the radius may vary under realistic conditions.

The tolerance flag can be provided in order to distinguish between acceptable variations and larger variations which indicate a serious error, e.g. of one of the sensors. For example, the tolerance flag can indicate that the (sine-cosine) signal pair is within a "normal functional zone" when the radius corresponding to the signal pair deviates from the expected radius by an amount equal to or below some threshold, and indicate that the (sine-cosine) signal pair is within a "dysfunctional zone" when the deviation exceeds the threshold. The normal functional zone and the dysfunctional zone can be represented by the tolerance flag being zero or one, respectively, or vice versa. Preferably, all possible sets of signals correspond either to the normal functional zone or the dysfunctional zone. The tolerance flag can be used to ensure a high reliability of the positional encoder. For example, when the tolerance flag indicates an error, the value outputted by the encoder is to be treated with care. Depending on the application, the output of the encoder can be ignored or error handling routines can be activated.

According to another preferred embodiment at least one of the memory units is further configured to output a transition flag as part of the outputted predetermined look-up value. The transition flag, which preferably is a single bit, is provided for indicating whether the current position of the moveable member is within a transition region. For example, ranges of positions of the moveable member where there is a transition from one pole of the moveable member to another one, are such transition regions. Especially, in case the moveable member comprises a magnetic element, a transition region can be defined as to include at least one position or a range of positions of the moveable member in which at least one of the sensors is proximal to a transition of two adjacent magnetic poles of the moveable member.

Detecting that the current position of the moveable member is within a transition region and indicating this by the transition flag serves in particular to compensate inaccuracy or shift of the relatively coarse absolute measurement of the position in a combined absolute and incremental positional encoder. If the absolute measurement is used to determine which one of the poles or pole pairs is currently cooperating with the incremental sensors for the incremental measurement, this cannot be determined with certainty within the transition region of two consecutive poles or pole pairs due to shift or other errors in the absolute measurement. The (possibly angular) width of the transition region hereby corresponds to the assumed or determined error range of the absolute measurement. When the transition flag is set indicating that the current position of the moveable member is within a transition region, additional measures can be taken to, e.g., more reliably determine the correct pole or pole pair.

According to an improved embodiment at least a further one of the memory units holds a plurality of predetermined look-up values, each predetermined look-up value of this further memory unit representing a positional value which corresponds to a respective pair of (i) a first signal corresponding to an absolute position of the moveable member and including a transition flag, and (ii) a second signal corresponding to an incremental position of the moveable member. Said further memory unit is in particular the third memory unit described above. Furthermore, each predetermined look-up value of this further memory unit is associated with an individual memory address which is formed by concatenating the first and second signals of the respective pair, wherein the further memory unit is configured to receive a memory address which is formed by concatenating first and second signals. In particular, the first signal received by the further memory unit is the predetermined look-up value outputted by the preceding memory unit with said transition flag being part of this outputted look-up value. Said preceding memory unit is in particular the first memory unit.

In order to compensate for errors in the outputted look-up values, e.g. due to noise or single event upsets in the outputting memory unit, preferably at least one of the outputted look-up values is low-pass filtered. A simple analog low-pass filter comprising, e.g., a resistor and a capacitor can be arranged in the positional encoder so as to filter at least one of the analog signals. However, filtering can also be executed digitally.

Preferably, respective resolutions of analog-to-digital converters of the positional encoder are adapted to ensure that an overall error of the positional value represented by an outputted predetermined look-up value is below a predetermined value. In particular, the resolutions of the analog-to-digital converters is dependent on the word length (number of bits) of the digital representations outputted by a respective converter, wherein the greater the number of bits, the finer the quantization and, hence, the higher the resolution.

The present invention is described in the following by means of exemplary embodiments shown in the enclosed drawings in which
- Fig. 1: shows a schematic drawing of a rotary encoder for measuring an absolute angular position of a rotary member;
- Fig. 2: shows a schematic illustration of a normal functional and a dysfunctional zone associated with a tolerance flag;
- Fig. 3: shows a schematic drawing of a rotary encoder for measuring an absolute angular position of a rotary member with high precision;
- Fig. 4: shows a diagram illustrating an example of evaluating an angular position with a rotary encoder.

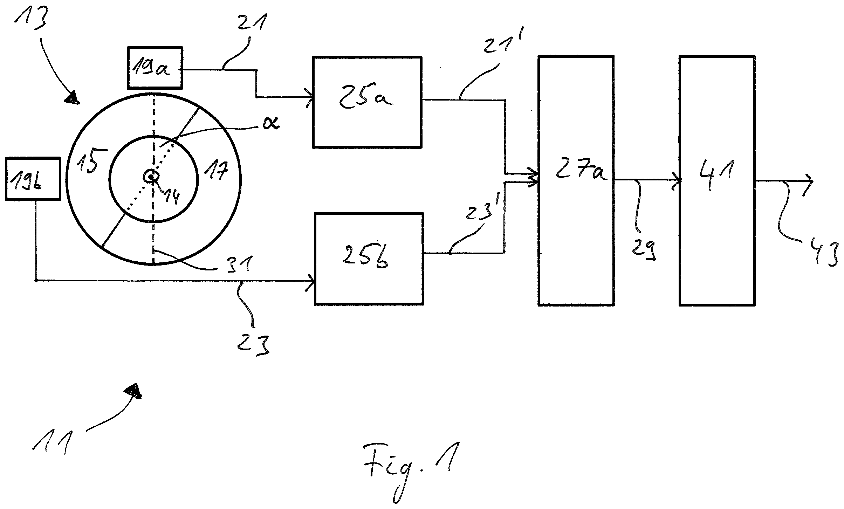

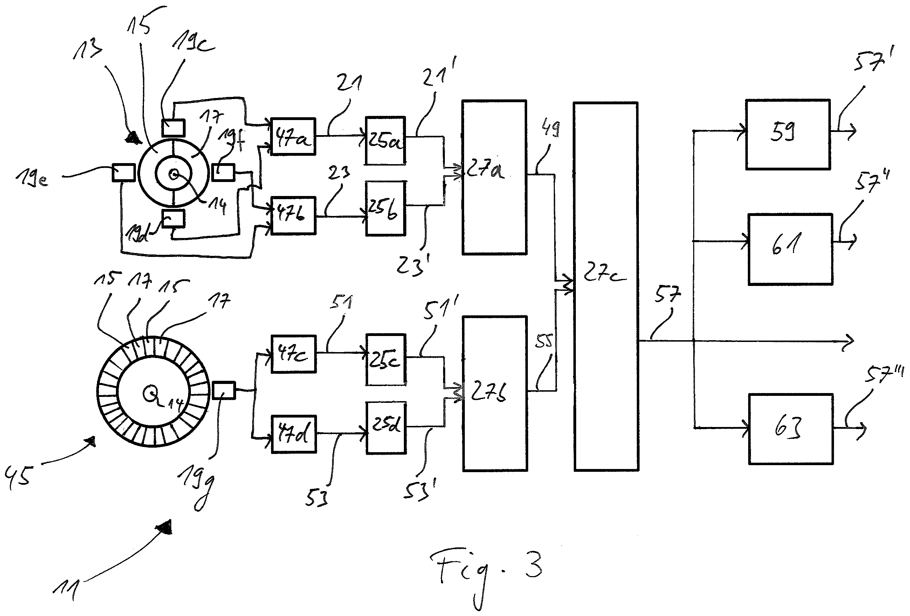

Fig. 1 and 3 show embodiments of positional encoders 11 configured as rotary encoders. However, it should be noted that the principles of operation of these rotary encoders 11 are likewise applicable to positional encoders of different kind, e.g. to linear encoders.

Fig. 1 shows a rotary encoder 11 comprising a rotary member formed by a first magnetic disk 13 which is rotatable with respect to a rotary axis 14. The rotary axis 14 extends vertically through the drawing plane. The first magnetic disk 13 has a first magnetic pole 15 and a second magnetic pole 17 arranged diametrically adjacent to each other and symmetrically with respect to the rotary axis 14. A first Hall sensor 19a and a second Hall sensor 19b are arranged at a circumference of the first magnetic disk 13 such that they span an angle of 90 degrees with respect to the rotary axis 14. The first and second Hall sensors 19a, 19b are adapted to capture the sine and cosine components of the absolute angular position of the first magnetic disk 13 with respect to the rotary axis 14, respectively. These sine and cosine components are obtained by way of measuring the magnetic field of the first magnetic disk 13. The first and second Hall sensors 19a and 19b output an analog first absolute signal 21 (sine) and an analog second absolute signal 23 (cosine), respectively. The analog first absolute signal 21 is fed into a first analog-to-digital converter 25a and the analog second absolute signal 23 is fed into a second analog-to-digital converter 25b. By way of example, both analog-to-digital converters 25a, 25b are configured to output digital 8-bit representations of the corresponding analog inputs 21, 23, i.e. the first converter 25a outputs an 8-bit digital first absolute signal 21' and the second converter 25b outputs an 8-bit digital second absolute signal 23'.

The digital signals 21', 23' are concatenated to form a memory address received by a first flash memory unit 27a, wherein the memory address preferably consists only of the signals 21', 23' combined by sequential chaining. The first memory unit 27a holds a predetermined look-up value 29 for each memory address that is possibly received by the first memory unit 27a. That is to say any pair of digital signals 21', 23' that can be generated from the Hall sensors 19a, 19b and that directly forms a memory address for the first memory unit 27a is associated with a predetermined look-up value 29 which is stored in the first memory unit 27a and outputted by the first memory unit 27a upon reception of the respective pair of digital absolute signals 21', 23'.

The capacity of the first memory unit 27a is adapted according to the word length of the received memory address and the output data bus length, which e.g. comprises at least 8 bits and/or up to 16 bits, in particular 12 bits, with optionally one bit reserved for error indication (in form of a tolerance flag or transition flag as described above, for instance). Considering an output data bus length of 8 bit and the memory address being as long as the sum of the word lengths of the digital signals 21', 23', i.e. 16 bit in this embodiment, the capacity of the first memory unit 27a amounts, e.g., to at least 512 kbit. In general, the capacity of a memory unit can be derived according to a semi-logarithmic relationship between the capacity and the word length of the memory address, since the memory unit needs a capacity of at least the data bus length times 2 to the power of the memory address word length.

A given predetermined look-up value 29 outputted by the first memory unit 27a in response to the pair of digital signals 21', 23' received in form of a memory address by the first memory unit 27a at a given time instant, is a digital value representing an angular value α which corresponds to the absolute angular position of the first magnetic disk 13. The angular value α is defined relative to a reference position in which the axis (dotted in Fig. 1) separating the first and second magnetic poles 15, 17 of the first magnetic disk 13 is aligned with a reference axis 31 (dashed in Fig. 1). By way of example, the angular value α is about 35 degrees in Fig. 1, but can be any angular value in the range of 0 to 360 degrees since the magnetic disk 13 is freely rotatable.

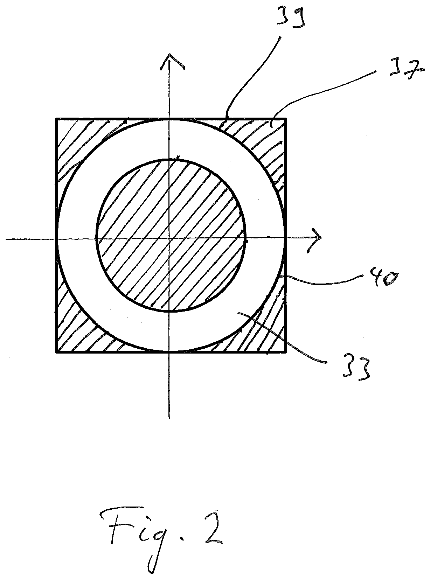

The look-up value 29 is outputted digitally by the first memory unit 27a and has a word length of preferably at least 5 bits and/or up to 16 bits. 1 bit of the look-up value 29 may serve as a tolerance flag (not shown). Fig. 2 shows a quadratic field 39 schematically representing all possible pairs of first (sine) and second (cosine) absolute signals, the abscissa of a respective point corresponding to the first absolute signal and the ordinate of the respective point corresponding to the second absolute signal. Preferably, the tolerance flag is 0 when the radius derivable from the square root of the sum of the squared sine and cosine signals 21, 23 (corresponding to the digital signals 21', 23') is within the ring-shaped tolerance region 33 shown in Fig. 2.

Ideally, the radius should always be constant and equal to one for the sine and cosine signals 21, 23. Under realistic conditions, however, several influence factors, such as temperature drift, electronic noise, airgap tolerance, non-linearity of a sensor and measurement errors, can take effect and cause radii which differ from the ideal constant radius. The tolerance region 33 thus captures the range of radii which are expectable under realistic conditions. In order to distinguish these expectable variations from larger error-indicating variations, a dysfunctional zone 37 is defined. In Fig. 2, this dysfunctional zone 37 is indicated by the hatched area of the field 39. When a respective pair of first and second signals falls within the dysfunctional zone 37, i.e. has a value outside the tolerance zone 33, the tolerance flag is set to 1. Hence, the tolerance flag can be regarded as the result of a plausibility check for the outputted look-up value representing the angular value α, wherein the plausibility check is evaluated in the "trigonometrical radius domain". It is to be noted that the state of the tolerance flag is not determined by calculation. Instead, since the tolerance flag is part of the outputted look-up value 29, the tolerance flag is predetermined. All the predetermined look-up values of the first memory unit 27a comprise both a predetermined representation of an angular value corresponding to a respective pair of first and second signals forming the memory address associated to the respective look-up value and the also predetermined tolerance flag corresponding to that same pair of first and second values.

The look-up value 29 is then inputted to a digital-to-analog converter 41 which converts the look-up value 29 - or at least the part of the look-up value 29 representing the angular value α - into an analog output signal 43. In case the tolerance flag is equal to 1, the output signal 43 can, e.g., be equal to a constant which indicates an error of the measurement. Otherwise, the output signal 43 is the analog value representing the angular value α.

The output signal 43 can optionally be low-pass filtered by means of a low-pass filter (not shown) in order to compensate for errors, e.g., bit errors due to single event upsets in the first memory unit 27a.

Fig. 3 shows a schematic diagram of another embodiment of a rotary encoder 11 which is of the combined absolute and incremental type and thereby adapted to measure an angular position with high precision. The rotary encoder 11 comprises a rotary member formed by the first magnetic disk 13 and a second magnetic disk 45 which are both rotatable with respect to the rotary axis 14. The magnetic disks 13, 45 are coaxially attached to each other and not rotatable relative to each other. In Fig. 3, the magnetic disks 13, 45 are shown separately in order to improve readability of the figure.

A pair of first Hall sensors 19c, 19d is arranged at a circumference of the first magnetic disk 13 on diametrically opposing sides of the first magnetic disk 13. The measurement signals outputted by the pair of first Hall sensors 19c, 19d are inputted into a first differential amplifier 47a, which outputs an analog first absolute signal 21 in response. A pair of second Hall sensors 19e, 19f is arranged at a circumference of the first magnetic disk 13 on diametrically opposing sides of the first magnetic disk 13 perpendicular to the pair of first Hall sensors 19c, 19d. The measurement signals outputted by the pair of second Hall sensors 19e, 19f are inputted into a second differential amplifier 47b, which outputs an analog second absolute signal 23 in response. The analog first and second absolute signals 21, 23, which represent the sine and cosine components of the absolute angular position of the first magnetic disk 13 with respect to the rotary axis 14, respectively, are then fed into the analog-to-digital converters 25a, 25b, respectively. Correspondingly, the analog-to-digital converters 25a, 25b output digital first and second absolute signals 21', 23', respectively, each digital signal 21', 23' having a word length of 8 bit. The digital signals 21', 23' are concatenated to form a memory address for the first memory unit 27a.

In response to receiving the memory address, in this embodiment, the first memory 27a is configured to output a predetermined look-up value 49 having a word length of 7 bit. The outputted look-up value 49 has a word length of 6 bit and comprises a representation of an absolute angular value corresponding to the angular position of the first magnetic disk 13. The remaining 1 bit of the look-up value 49 serves as a transition flag, which will be explained further below.

The second magnetic disk 45 comprises a plurality of first magnetic poles 15 and second magnetic poles 17 alternately arranged along the full circumference of the second magnetic disk 45. The number of magnetic poles 15, 17 of the second magnetic disk 45 is higher than the number of magnetic poles 15, 17 of the first magnetic disk 13, e.g. at least 20 and/or up to 200 single poles 15, 17 on the second magnetic disk 45 versus 2 poles 15, 17 on the first magnetic disk 13. A magnetoresistive sensor 19g is arranged at a circumference of the second magnetic disk 45 without touching it. The magnetoresistive sensor 19g comprises two Wheatstone bridges (not shown) which are adapted to capture two sine signals phase shifted by 90 degree with respect to each other (thus corresponding to sine and cosine signals, respectively), both signals being representative of a current position of a respective pole pair 15, 17 of the second magnetic disk 45 being currently closest to the sensor 19g. In this respect, the magnetoresistive sensor 19g represents two sensors (a first sensor and a second sensor which, in particular, capture sine and cosine components of the angular position of the second magnetic disk 45, respectively) combined into a single unit. Therefore, the magnetoresistive sensor 19g could also be replaced by two individual sensors. Measured signals of the sensor 19g are fed into third and fourth amplifiers 47c and 47d. The third amplifier 47c outputs an analog first incremental signal 51 and the fourth amplifier 47d outputs an analog second incremental signal 53.

The analog first incremental signal 51 is fed into a third analog-to-digital converter 25c and the analog second incremental signal 53 is fed into a fourth analog-to-digital converter 25d. By way of example, the third and fourth analog-to-digital converters 25c, 25d are both configured to output digital 12-bit representations of the corresponding analog inputs 51, 53, i.e. the third converter 25c outputs a 12-bit digital first incremental signal 51' and the fourth converter 25d outputs a 12-bit digital second incremental signal 53'. Especially, the resolutions of the analog-to-digital converts 25a, 25b, 25c, 25d are chosen such that the overall measurement error of measuring the angular position of the rotary member of the rotary encoder 11 is at least below 0.05 degrees, preferably below 0.02 degrees, in particular below 0.01 degrees.

The digital signals 51', 53' are concatenated to form a memory address received by a second flash memory unit 27b. The second memory unit 27b holds a predetermined look-up value 55 for each memory address that is possibly received by the second memory unit 27b. That is to say any pair of digital signals 51', 53' that can be generated from the sensor 19g and that forms a memory address for the second memory unit 27b is associated with a predetermined look-up value 55 which is stored in the second memory unit 27b and outputted by the second memory unit 27b upon reception of the respective pair of digital incremental signals 51', 53'.

For a given pair of digital incremental signals 51', 53' the second memory unit 27b outputs a predetermined look-up value 55 in response to the memory address formed by the digital signals 51', 53'. By way of example, the look-up value 55 has a word length of 15 bit and comprises a representation of an incremental angular value corresponding to the position of a pole pair 15, 17 of the second magnetic disk 45. In the present exemplary embodiment, the second memory unit 27b has a data bus length of 16 bit and a capacity of 256 Mbit.

The predetermined look-up values 49, 55 outputted by the first and second memory units 27a, 27b and having a word length of 7 and 15 bits, respectively, form a memory address for a third flash memory unit 27c which has a capacity of 64 Mbit. The third memory unit 27c holds a predetermined look-up value 57 for each memory address that is possibly received by the third memory unit 27c. That is to say any pair of predetermined look-up values 49, 55 that forms a memory address for the third memory unit 27c is associated with a predetermined look-up value 57 which is stored in the memory unit 27c and outputted by the third memory unit 27c upon reception of the respective pair of look-up values 49, 55 outputted by the first and second memory units 27,a, 27b, respectively. In the embodiment shown in Fig. 3, the memory address for the memory unit 27c is effectively formed by a triple comprising a representation of the absolute angular value and a transition flag (as parts of the look-up value 49) as well as a representation of the incremental angular value (as part of the look-up value 55). The order of these parts of the triple within the memory address may be chosen according to any possible order as far as the third memory unit 27c is configured correspondingly.

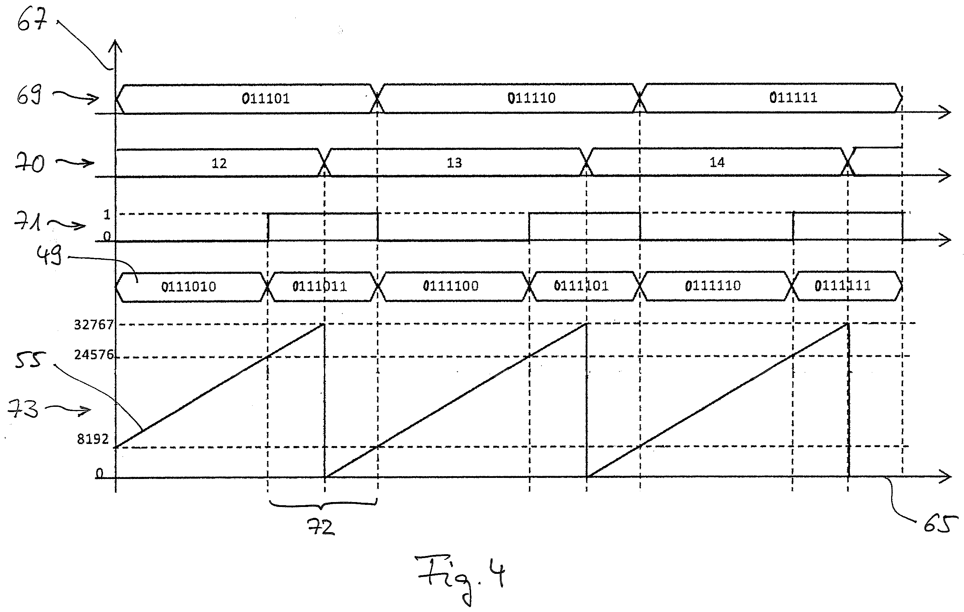

The transition flag generally serves for indicating whether the current angular position of the rotary member is within a transition region of two adjacent magnetic poles 15, 17. In the embodiment shown in Fig. 3, the transition flag indicates whether the current angular position of the rotary member is within a transition region of two adjacent magnetic poles 15, 17 of the second magnetic disk 45. Especially, a respective transition region is defined by angular positions in which the sensor 19g is proximal to the transition of a pair of first and second magnetic poles 15 and 17 of the second magnetic disk 45 to an adjacent pair of first and second magnetic poles 15 and 17 of the second magnetic disk 45. A transition region can be further defined as a small angular sector of, e.g., 1 to 10 degrees, centered around a respective transition. The purpose of the transition flag will be described with respect to Fig. 4.

The predetermined look-up value 57 outputted by the third memory unit 27c has a word length of, e.g., 16 bit and comprises a representation of a high-precision digital angular value corresponding to the angular position of the rotary member of the rotary encoder 11. The outputted look-up value 57 can also comprise a tolerance flag, wherein the representation of the high-precision digital angular value then has a word length of, e.g., 15 bit, whereas the remaining 1 bit serves as the tolerance flag. In this case, the tolerance flag can correspond to a tolerance flag received by the third memory unit 27c as part of a memory address and simply passed through the third memory unit 27c. Alternatively, the tolerance flag can originate from the third memory unit 27c and be based on the plausibility of the signals entering the third memory unit 27c.

Depending on the specific application, the look-up value 57 can be further processed, e.g. by means of a digital-to-analog converter 59, a Synchronous-Serial-Interface (SSI) converter 61, and an A/B Z converter 63 yielding output signals 57', 57", and 57"', respectively.

Fig. 4 illustrates the correspondence between a respective memory address received by the third memory unit 27c comprising a representation of an absolute angular position, a representation of an incremental angular position and a transition flag on the one hand and the predetermined look-up value 57 derived therefrom on the other hand. The axis 65 ("x-axis") is associated with the angular position of the rotary member of the rotary encoder 11 shown in Fig. 3. Only a small part of the full range of angular positions of the rotary member is shown. The axis 67 ("y-axis") is associated with data generated by the rotary encoder 11 during rotation of the rotary member, as will be explained in the following.

From top to bottom the data shown are: digital representations (from 011101 to 011111) of an absolute angular value 69 outputted by the first memory unit 27a as part of a respective look-up value 49; sequential numbers 70 (from 12 to 14) of consecutive physical pole pairs 15, 17 of the second magnetic disk 45; a transition flag 7 which is a single bit being 1 within a transition region 72 around a transition from one pole pair 15, 17 to another and 0 otherwise, the transition flag 71 being outputted by the first memory unit 27a as part of a respective look-up value 49; look-up values 49 (from 0111010 to 0111111) outputted by the first memory unit 27a and comprising the respective digital representation of an absolute angular value 69 followed by the transition flag 71; and representations of an incremental angular value 73 starting at 0 and increasing linearly to 32767 for each pole pair 15, 17. These last-mentioned representations 73 (converted to digital form) form look-up values 55 outputted by the second memory unit 27b.

The look-up values 49 outputted by the first memory unit 27a and the look-up values 55 outputted by the second memory unit 27b therefore comprise all the information about the angular position of the rotary member of the rotary encoder 11 and are received being concatenated to a memory address by the third memory unit 27c, which in response outputs a predetermined look-up value 57 associated with the address. The predetermined look-up values 57 stored in the third memory unit 27c are calculated prior to storage taking into account the respective absolute angular value 69, the respective incremental angular value 73 and the transition flag 71 as explained in the following.

The basic concept of combining the absolute angular value 69 and the incremental angular value 73 is to use the absolute angular value 69 for identifying a physical pole pair 70 currently captured by the magnetic sensor 19g and, thus, determining an angular range the current angular position of the rotary member falls within. The incremental angular value 73 can then be used to determine the precise angular position of the rotary member within this angular range.

The absolute angular value 69, however, is subject to some measurement error or shift, especially since the first magnetic disk 13 only has two magnetic poles 15, 17. Therefore, while outside a transition region 72 around a transition between two consecutive pole pairs 15, 17 the incremental angular value 73 can readily be used, within the transition region 72 there is uncertainty which one of the pole pairs 15, 17 is the one actually captured by the magnetic sensor 19g. Consequently, if the transition flag 71 is set, the correct pole pair 70 is identified by an additional check: If the incremental angular value 73 is in a high range (from 24576 to 32767, cf. dashed horizontal lines), the preceding one of the two possible pole pairs 70 is the right one, if the incremental angular value 73 is in a low range (from 0 to 8192, cf. dashed horizontal line), the succeeding one of the two possible pole pairs 70 is the right one. After this check, the measured incremental angular value 73 can be applied to the angular range corresponding to the right pole pair 70 in the normal way to determine the angular value representing the angular position of the rotary member of the rotary encoder 11 with high precision.

The above evaluation of the angular value finally outputted by the third memory unit 27c is described in order to facilitate the understanding of the rotary encoder 11 of Fig. 3. The above evaluation is, however, not conducted online during each measurement. Instead, the third memory unit 27c is preferably configured such that it receives the absolute and incremental angular values and the transition flag as a combined memory address and outputs the final angular value (i.e., the look-up value 57) without any further processing steps beyond reading of the third memory unit 27c at the respective address. This is to say that all processing steps have already been considered during a pre-calculation phase in which the input-output characteristic of the third memory unit 27c has been determined. Thus, the rotary encoder 11 is particularly reliable and quick since the final angular value is simply evaluated by successive reading of predetermined look-up values 57.

### Reference signs

- 11: rotary encoder
- 13: first magnetic disk
- 14: rotary axis
- 15: first magnetic pole
- 17: second magnetic pole
- 19: magnetic sensor
- 21: analog first absolute signal
- 21': digital first absolute signal
- 23: analog second absolute signal
- 23': digital second absolute signal
- 25: analog-to-digital converter
- 27: flash memory unit
- 29: look-up value
- 31: reference axis
- 33: tolerance region
- 37: dysfunctional zone
- 39: quadratic field
- 40: outer circle
- 41: digital-to-analog converter
- 43: output signal
- 45: second magnetic disk
- 47: differential amplifier
- 49: look-up value
- 51: analog first incremental signal
- 51': digital first incremental signal
- 53: analog second incremental signal
- 53': digital second incremental signal
- 55: look-up value
- 57: look-up value
- 59: digital-to-analog converter
- 61: SSI converter
- 63: A/B Z converter
- 65: x-axis
- 67: y-axis
- 69: digital representation of an absolute angular value
- 70: physical pole number
- 71: transition bit
- 72: transition region
- 73: representation of an incremental angular value
- α: angular value

## Claims

1. Positional encoder (11), comprising
- a moveable member (13, 45), and
- at least a first sensor (19a, 19c, 19d) and a second sensor (19b, 19e, 19f), the moveable member (13, 45) being moveable relative to the first and second sensors (19a, 19b, 19c, 19d, 19e, 19f),
the first sensor (19a, 19c, 19d) being adapted to capture a first component of a current position of the moveable member (13, 45) and to output a first signal (21) corresponding to the first component,
the second sensor (19b, 19e, 19f) being adapted to capture a second component of the current position complementary to the first component and to output a second signal (23) corresponding to the second component, wherein the positional encoder (11) further comprises
- at least a first memory unit (27a) holding a plurality of predetermined look-up values (29, 49),
each predetermined look-up value (29, 49) representing a positional value which corresponds to a respective set of at least the first and second signals (21, 23) and being associated with an individual memory address which is formed by concatenating the signals (21, 23) of the respective set, the first memory unit (27a) being configured to receive a memory address which is formed by concatenating at least the first and second signals (21, 23) outputted by the first and second sensors (19a, 19b, 19c, 19d, 19e, 19f), respectively, and to output the predetermined look-up value (29, 49) associated with the received memory address in response.

2. Positional encoder (11) according to claim 1,
wherein the positional encoder (11) further comprises
- at least a third and a fourth sensor (19g),
the moveable member (13, 45) being moveable relative to the first, second, third and fourth sensors (19c, 19d, 19e, 19f, 19g),
the first sensor (19c, 19d) being adapted to capture a first component of a current absolute position of the moveable member (13, 45) and to output a first absolute signal (21) corresponding to the first component of the current absolute position,
the second sensor (19e, 19f) being adapted to capture a second component of the current absolute position complementary to the first component of the current absolute position and to output a second absolute signal (23) corresponding to the second component of the current absolute position, the third sensor (19g) being adapted to capture a first component of a current incremental position of the moveable member and to output a first incremental signal (51) corresponding to the first component of the current incremental position,
the fourth sensor (19g) being adapted to capture a second component of the current incremental position complementary to the first component of the current incremental position and to output a second incremental signal (53) corresponding to the second component of the current incremental position,
wherein the first memory unit (27a) is configured to receive a memory address which is formed by at least one of
- concatenating the first and second absolute signals (21, 23) outputted by the first and second sensors (19c, 19d, 19e, 19f), respectively, and
- concatenating the first and second incremental signals (51, 53) outputted by the third and fourth sensors (19g), respectively.

3. Positional encoder (11) according to claim 2,
wherein each predetermined look-up value (49) of the first memory unit (27a) represents a positional value which corresponds to a respective set of the first, second, third and fourth signals (21, 23, 51, 53) and is associated with an individual memory address which is formed by concatenating the first, second, third and fourth signals (21, 23, 51, 53) of the respective set, the first memory unit (27a) being configured to receive a memory address which is formed by concatenating the first, second, third and fourth signals (21, 23, 51, 53) outputted by the first, second, third and fourth sensors (19c, 19d, 19e, 19f, 19g), respectively, and to output the predetermined look-up value (49, 55) associated with the received memory address in response.

4. Positional encoder (11) according to claim 2,
wherein each predetermined look-up value (49) of the first memory unit (27a) represents a positional value which corresponds to a respective pair of the first and second absolute signals (21, 23) and is associated with an individual memory address which is formed by concatenating the first and second absolute signals (21, 23) of the respective pair,
wherein the first memory unit (27a) is configured to receive a memory address which is formed by concatenating the first and second absolute signals (21, 23) outputted by the first and second sensors (19c, 19d, 19e, 19f), respectively,
wherein the positional encoder (11) further comprises at least a second memory unit (27b) holding a plurality of predetermined look-up values (55),
each predetermined look-up value (55) representing a positional value which corresponds to a respective pair of the first and second incremental signals (51, 53) and being associated with an individual memory address which is formed by concatenating the first and second incremental signals (51, 53) of the respective pair,
the second memory unit (27b) being configured to receive a memory address which is formed by concatenating the first and second incremental signals (51, 53) outputted by the third and fourth sensors (19g), respectively, and to output the predetermined look-up value (55) associated with the received memory address in response.

5. Positional encoder (11) according to claim 2,
wherein the positional encoder (11) further comprises at least a second memory unit (27c) holding a plurality of predetermined look-up values (57),
each predetermined look-up value (57) representing a positional value which corresponds to a respective triple of the predetermined look-up value (49, 55) outputted by the first memory unit (27a, 27b) and the first and second signals (21, 23, 51, 53) not forming the memory address received by the first memory unit (27a, 27b),
each predetermined look-up value (57) further being associated with an individual memory address which is formed by concatenating the predetermined look-up value (49, 55) and the first and second signals (21, 23, 51, 53) of the respective triple,
the second memory unit (27c) being configured to receive a memory address which is formed by concatenating the predetermined look-up value (49, 55) outputted by the first memory unit (27a, 27b) and the first and second signals (21, 23, 51, 53) not forming the memory address received by the first memory unit (27a, 27b) and to output the predetermined look-up value (57) associated with the received memory address in response.

6. Positional encoder (11) according to claim 4,
wherein the positional encoder (11) further comprises
- at least a third memory unit (27c) holding a plurality of predetermined look-up values (57),
each predetermined look-up value (57) representing a positional value which corresponds to a respective pair of the predetermined look-up value (49) outputted by the first memory unit (27a) and the predetermined look-up value (55) outputted by the second memory unit (27b) and being associated with an individual memory address which is formed by concatenating the predetermined look-up value (49) outputted by the first memory unit (27a) and the predetermined look-up value (55) outputted by the second memory unit (27b) of the respective pair,
the third memory unit (27c) being configured to receive a memory address which is formed by concatenating the predetermined look-up value (49) outputted by the first memory unit (27a) and the predetermined look-up value (55) outputted by the second memory unit (27b) and to output the predetermined look-up value (57) associated with the received memory address in response.

7. Positional encoder (11) according to any of the preceding claims,
the positional encoder (11) being configured as a rotary encoder (11), wherein the moveable member (13, 45) is a rotary member (13, 45) rotatable relative to respective sensors (19a, 19b, 19c, 19d, 19e, 19f, 19g) which are adapted to capture respective components of current angular positions of the rotary member (13, 45),
and wherein each predetermined look-up value held by a respective memory unit (27a, 27b, 27c) represents an angular value.

8. Positional encoder (11) according to any of the preceding claims,
wherein the first and second sensors (19a, 19b, 19c, 19d, 19e, 19f) are magnetic sensors and the moveable member (13, 45) comprises a first magnetic element (13) having a number of magnetic poles (15, 17) evenly arranged along an extension of the moveable member (13, 45), in particular two magnetic poles (15, 17) diametrically opposed with respect to a center of the moveable member (13, 45),
the first and second sensors (19a, 19b, 19c, 19d, 19e, 19f) being configured to cooperate with the first magnetic element (13).

9. Positional encoder (11) according to claim 2 or a combination of claim 2 with any of claims 3 to 8,
wherein the third and fourth sensors (19g) are magnetic sensors and the moveable member (13, 45) comprises a second magnetic element (45) having a number of magnetic poles (15, 17) evenly arranged along an extension of the moveable member (13, 45), in particular at least 8 and/or up to 90, preferably at least 16 and/or up to 72, further preferably at least 32 and/or up to 52 magnetic poles (15, 17) alternately arranged along an extension of the moveable member (13, 45),
the third and fourth sensors (19g) being configured to cooperate with the second magnetic element (45).

10. Positional encoder (11) according to any of the preceding claims,
wherein the positional encoder (11) comprises at least one analog-to-digital converter (25a, 25b, 25c, 25d) configured to receive an analog representation of one of the first and second signals (21, 23, 49, 51, 53, 55) and to output a digital representation (21', 23', 51', 53') of the received signal (21, 23, 49, 51, 53, 55);
and/or
wherein the positional encoder (11) comprises at least one digital-to-analog converter (41, 59) configured to receive a digital representation of one of the predetermined look-up values (29, 49, 55, 57) and to output an analog representation of the received look-up value (29, 49, 55, 57).

11. Positional encoder (11) according to any of the preceding claims,
wherein at least one of the memory units (27a, 27b, 27c) is further configured to output a tolerance flag as part of the outputted predetermined look-up value (29, 49, 55, 57), wherein the tolerance flag is provided for indicating whether the outputted predetermined look-up value (29, 49, 55, 57) corresponds to a set of signals, in particular to a pair of first and second signals (21, 23, 49, 51, 53, 55), within a tolerance region (33).

12. Positional encoder (11) according to any of the preceding claims,
wherein at least one of the memory units (27a, 27b, 27c) is further configured to output a transition flag (71) as part of the outputted predetermined look-up value (29, 49, 55, 57), wherein the transition flag (71) is provided for indicating whether the current position of the moveable member (13, 45) is within a transition region (72).

13. Positional encoder (11) according to claim 12,
wherein the transition region (72) includes at least one position in which at least one of the sensors (19a, 19b, 19c, 19d, 19e, 19f, 19g) is proximal to a transition of two adjacent magnetic poles (15, 17) of the moveable member, which are arranged along an extension of the moveable member (13, 45).

14. Positional encoder (11) according to claim 12 or 13,
wherein at least a further one of the memory units (27a, 27b, 27c) holds a plurality of predetermined look-up values (57),
each predetermined look-up value (57) of the further memory unit (27c) representing a positional value which corresponds to a respective pair of
- a first signal (49) corresponding to an absolute position of the moveable member and including a transition flag (71), and
- a second signal (55) corresponding to an incremental position of the moveable member,
and being associated with an individual memory address which is formed by concatenating the first and second signals (49, 55) of the respective pair, the further memory unit (27c) being configured to receive a memory address which is formed by concatenating first and second signals (49, 55).

15. Positional encoder (11) according to any of the preceding claims,
wherein at least one of the outputted look-up values (29, 49, 55, 57) is low-pass filtered
and/or
wherein respective resolutions of analog-to-digital converters (25a, 25b, 25c, 25d) of the positional encoder (11) are adapted to ensure that an overall error of the positional value represented by an outputted predetermined look-up value (29, 49, 55, 57) is below a predetermined value.

## Patentansprüche

1. Positionscodierer (11), der umfasst
- ein bewegbares Element (13, 45), und
- mindestens einen ersten Sensor (19a, 19c, 19d) und einen zweiten Sensor (19b, 19e, 19f), wobei das bewegbare Element (13, 45) relativ zu dem ersten und zweiten Sensor (19a, 19b, 19c, 19d, 19e, 19f) bewegbar ist,
wobei der erste Sensor (19a, 19c, 19d) angepasst ist, um eine erste Komponente einer aktuellen Position des bewegbaren Elements (13, 45) zu erfassen und um ein erstes Signal (21) auszugeben, das der ersten Komponente entspricht,
wobei der zweite Sensor (19b, 19e, 19f) angepasst ist, um eine zweite Komponente der aktuellen Position zu erfassen, die komplementär zu der ersten Komponente ist, und um ein zweites Signal (23) auszugeben, das der zweiten Komponente entspricht,
wobei der Positionscodierer (11) ferner umfasst
- mindestens eine erste Speichereinheit (27a), die eine Vielzahl vorbestimmter Nachschlagewerte (29, 49) enthält,
wobei jeder vorbestimmte Nachschlagewert (29, 49) einen Positionswert repräsentiert, der einem jeweiligen Satz aus mindestens dem ersten und dem zweiten Signal (21, 23) entspricht und einer individuellen Speicheradresse zugeordnet ist, die durch Verketten der Signale (21, 23) des jeweiligen Satzes gebildet wird, wobei die erste Speichereinheit (27a) ausgestaltet ist, um eine Speicheradresse zu empfangen, die durch Verketten mindestens des ersten und zweiten Signals (21, 23) gebildet wird, welche jeweils von dem ersten und zweiten Sensor (19a, 19b, 19c, 19d, 19e, 19f) ausgegeben werden, und um in Ansprechen darauf den vorbestimmten Nachschlagewert (29, 49), der der empfangenen Speicheradresse zugeordnet ist, auszugeben.

2. Positionscodierer (11) nach Anspruch 1,
wobei der Positionscodierer (11) ferner umfasst
- mindestens einen dritten und einen vierten Sensor (19g),
wobei das bewegbare Element (13, 45) relativ zu dem ersten, dem zweiten, dem dritten und dem vierten Sensor (19c, 19d, 19e, 19f, 19g) bewegbar ist,
wobei der erste Sensor (19c, 19d) angepasst ist, um eine erste Komponente einer aktuellen Absolutposition des bewegbaren Elements (13, 45) zu erfassen und um ein erstes Absolutsignal (21) auszugeben, das der ersten Komponente der aktuellen Absolutposition entspricht,
wobei der zweite Sensor (19e, 19f) angepasst ist, um eine zweite Komponente der aktuellen Absolutposition, die zu der ersten Komponente der aktuellen Absolutposition komplementär ist, zu erfassen, und um ein zweites Absolutsignal (23) auszugeben, das der zweiten Komponente der aktuellen Absolutposition entspricht, wobei der dritte Sensor (19g) angepasst ist, um eine erste Komponente einer aktuellen inkrementellen Position des bewegbaren Elements zu erfassen und um ein erstes inkrementelles Signal (51) auszugeben, das der ersten Komponente der aktuellen inkrementellen Position entspricht,
wobei der vierte Sensor (19g) angepasst ist, um eine zweite Komponente der aktuellen inkrementellen Position zu erfassen, die komplementär zu der ersten Komponente der aktuellen inkrementellen Position ist, und um ein zweites inkrementelles Signal (53) auszugeben, das der zweiten Komponente der aktuellen inkrementellen Position entspricht,
wobei die erste Speichereinheit (27a) ausgestaltet ist, um eine Speicheradresse zu empfangen, die gebildet wird durch
- Verketten des ersten und zweiten Absolutsignals (21, 23), die jeweils von dem ersten und zweiten Sensor (19c, 19d, 19e, 19f) ausgegeben werden, und/oder
- Verketten des ersten und zweiten inkrementellen Signals (51, 53), die jeweils von dem dritten und vierten Sensor (19g) ausgegeben werden.

3. Positionscodierer (11) nach Anspruch 2,
wobei jeder vorbestimmte Nachschlagewert (49) der ersten Speichereinheit (27a) einen Positionswert repräsentiert, der einem jeweiligen Satz der ersten, zweiten, dritten und vierten Signale (21, 23, 51, 53) entspricht und einer individuellen Speicheradresse zugeordnet ist, die gebildet wird, indem das erste, zweite, dritte und vierte Signal (21, 23, 51, 53) des jeweiligen Satzes verkettet werden, wobei die erste Speichereinheit (27a) ausgestaltet ist, um eine Speicheradresse zu empfangen, die durch Verketten der ersten, zweiten, dritten und vierten Signale (21, 23, 51, 53) gebildet wird, welche jeweils von den ersten, zweiten, dritten und vierten Sensoren (19c, 19d, 19e, 19f, 19g) ausgegeben werden, und um in Ansprechen darauf den vorbestimmten Nachschlagewert (49, 55) auszugeben, der der empfangenen Speicheradresse zugeordnet ist.

4. Positionscodierer (11) nach Anspruch 2,
wobei jeder vorbestimmte Nachschlagewert (49) der ersten Speichereinheit (27a) einen Positionswert repräsentiert, der einem jeweiligen Paar der ersten und zweiten Absolutsignale (21, 23) entspricht und einer individuellen Speicheradresse zugeordnet ist, welche gebildet wird, in dem das erste und zweite Absolutsignal (21, 23) des jeweiligen Paars verkettet werden,
wobei die erste Speichereinheit (27a) ausgestaltet ist, um eine Speicheradresse zu empfangen, welche gebildet wird, indem das erste und zweite Absolutsignal (21, 23), die jeweils von den ersten und zweiten Sensoren (19c, 19d, 19e, 19f) ausgegeben werden, verkettet werden,
wobei der Positionscodierer (11) ferner umfasst
mindestens eine zweite Speichereinheit (27b), die eine Vielzahl vorbestimmter Nachschlagewerte (55) enthält,
wobei jeder vorbestimmte Nachschlagewert (55) einen Positionswert repräsentiert, welcher einem jeweiligen Paar der ersten und zweiten inkrementellen Signale (51, 53) entspricht und einer individuellen Speicheradresse zugeordnet ist, die gebildet wird, indem das erste und zweite inkrementelle Signal (51, 53) des jeweiligen Paars verkettet werden,
wobei die zweite Speichereinheit (27b) ausgestaltet ist, um eine Speicheradresse zu empfangen, die gebildet wird, indem das erste und zweite inkrementelle Signal (51, 53) verkettet werden, die jeweils von den dritten und vierten Sensoren (19g) ausgegeben werden, und um in Ansprechen darauf den vorbestimmten Nachschlagewert (55), der der empfangenen Speicheradresse zugeordnet ist, auszugeben.

5. Positionscodierer (11) nach Anspruch 2,
wobei der Positionscodierer (11) ferner umfasst
mindestens eine zweite Speichereinheit (27c), die eine Vielzahl vorbestimmter Nachschlagewerte (57) enthält,
wobei jeder vorbestimmte Nachschlagewert (57) einen Positionswert repräsentiert, welcher einem jeweiligen Tripel aus dem vorbestimmten Nachschlagewert (49, 55), der von der ersten Speichereinheit (27a, 27b) ausgegeben wird, und aus den ersten und zweiten Signalen (21, 23, 51, 53), welche nicht die Speicheradresse bilden, die von der ersten Speichereinheit (27a, 27b) empfangen wird, entspricht, wobei jeder vorbestimmte Nachschlagewert (57) ferner einer individuellen Speicheradresse zugeordnet ist, die gebildet wird, indem der vorbestimmte Nachschlagewert (49, 55) und die ersten und zweiten Signale, (21, 23, 51, 53) des jeweiligen Tripels verkettet werden,
wobei die zweite Speichereinheit (27c) ausgestaltet ist, um eine Speicheradresse zu empfangen, die gebildet wird, indem der vorbestimmte Nachschlagewert (49, 55), der von der ersten Speichereinheit (27a, 27b) ausgegeben wird, und die ersten und zweiten Signale (21, 23, 51, 53), welche nicht die Speicheradresse bilden, die von der ersten Speichereinheit (27a, 27b) empfangen wurde, verkettet werden, und um in Ansprechen darauf den vorbestimmten Nachschlagewert (57) auszugeben, der der empfangenen Speicheradresse zugeordnet ist.

6. Positionscodierer (11) nach Anspruch 4,
wobei der Positionscodierer (11) ferner umfasst
- mindestens eine dritte Speichereinheit (27c), die eine Vielzahl vorbestimmter Nachschlagewerte (57) enthält,
wobei jeder vorbestimmte Nachschlagewert (57) einen Positionswert repräsentiert, der einem jeweiligen Paar aus dem vorbestimmten Nachschlagewert (49), der von der ersten Speichereinheit (27a) ausgegeben wird, und dem vorbestimmten Nachschlagewert (55), der von der zweiten Speichereinheit (27b) ausgegeben wird, entspricht und einer individuellen Speicheradresse zugeordnet ist, welche gebildet wird, indem der vorbestimmte Nachschlagewert (49) des jeweiligen Paars, der von der ersten Speichereinheit (27a) ausgegeben wird, und der vorbestimmte Nachschlagewert (55) des jeweiligen Paars, der von der zweiten Speichereinheit (27b) ausgegeben wird, verkettet werden,
wobei die dritte Speichereinheit (27c) ausgestaltet ist, um eine Speicheradresse zu empfangen, die gebildet wird, indem der vorbestimmte Nachschlagewert (49), der von der ersten Speichereinheit (27a) ausgegeben wird, und der vorbestimmte Nachschlagewert (55), der von der zweiten Speichereinheit (27b) ausgegeben wird, verkettet werden, um in Ansprechen darauf den vorbestimmten Nachschlagewert (57) auszugeben, welcher der empfangenen Speicheradresse zugeordnet ist.

7. Positionscodierer (11) nach einem der vorstehenden Ansprüche,
wobei der Positionscodierer (11) als Drehcodierer (11) ausgestaltet ist,
wobei das bewegbare Element (13, 45) ein Drehelement (13, 45) ist, das relativ zu jeweiligen Sensoren (19a, 19b, 19c, 19d, 19e, 19f, 19g) drehbar ist, welche angepasst sind, um jeweilige Komponenten von aktuellen Winkelpositionen des Drehelements (13, 45) zu erfassen,
und wobei jeder vorbestimmte Nachschlagewert, der durch eine jeweilige Speichereinheit (27a, 27b, 27c) vorgehalten wird, einen Winkelwert repräsentiert.

8. Positionscodierer (11) nach einem der vorstehenden Ansprüche,
wobei der erste und zweite Sensor (19a, 19b, 19c, 19d, 19e, 19f) magnetische Sensoren sind und das bewegbare Element (13, 45) ein erstes magnetisches Element (13) mit einer Anzahl von Magnetpolen (15, 17) umfasst, die entlang einer Ausdehnung des bewegbaren Elements (13, 45) gleichmäßig angeordnet sind, insbesondere zwei Magnetpole (15, 17), die mit Bezug auf einen Mittelpunkt des bewegbaren Elements (13, 45) diametral entgegengesetzt angeordnet sind, wobei der erste und zweite Sensor (19a, 19b, 19c, 19d, 19e, 19f) ausgestaltet sind, um mit dem ersten magnetischen Element (13) zusammenzuarbeiten.

9. Positionscodierer (11) nach Anspruch 2 oder einer Kombination aus Anspruch 2 mit einem der Ansprüche 3 bis 8,
wobei der dritte und vierte Sensor (19g) magnetische Sensoren sind und das bewegbare Element (13, 45) ein zweites magnetisches Element (45) umfasst, das eine Anzahl von Magnetpolen (15, 17) aufweist, die entlang einer Ausdehnung des bewegbaren Elements (13, 45) gleichmäßig angeordnet sind, insbesondere mindestens 8 und/oder bis zu 90, vorzugsweise mindestens 16 und/oder bis zu 72, ferner vorzugsweise mindestens 32 und/oder bis zu 52 Magnetpole (15, 17), die abwechselnd entlang einer Ausdehnung des bewegbaren Elements (13, 45) angeordnet sind,
wobei der dritte und vierte Sensor (19g) ausgestaltet sind, um mit dem zweiten magnetischen Element (45) zusammenzuarbeiten.

10. Positionscodierer (11) nach einem der vorstehenden Ansprüche,
wobei der Positionscodierer (11) mindestens einen Analog/Digital-Wandler (25a, 25b, 25c, 25d) umfasst, der ausgestaltet ist, um eine analoge Repräsentation von einem der ersten und zweiten Signale (21, 23, 49, 51, 53, 55) zu empfangen und um eine digitale Repräsentation (21', 23', 51', 53') des empfangenen Signals (21, 23, 49, 51, 53, 55) auszugeben;
und/oder
wobei der Positionscodierer (11) mindestens einen Digital/Analog-Wandler (41, 59) umfasst, der ausgestaltet ist, um eine digitale Repräsentation von einem der vorbestimmten Nachschlagewerte (29, 49, 55, 57) zu empfangen und um eine analoge Repräsentation des empfangenen Nachschlagewerts (29, 49, 55, 57) auszugeben.

11. Positionscodierer (11) nach einem der vorstehenden Ansprüche,
wobei mindestens eine der Speichereinheiten (27a, 27b, 27c) ferner ausgestaltet ist, um einen Toleranzmerker als Teil des ausgegebenen vorbestimmten Nachschlagewerts (29, 49, 55, 57) auszugeben, wobei der Toleranzmerker bereitgestellt wird, um anzuzeigen, ob der ausgegebene vorbestimmte Nachschlagewert (29, 49, 55, 57) einem Satz von Signalen innerhalb einer Toleranzregion (33) entspricht, insbesondere einem Paar erster und zweiter Signale (21, 23, 49, 51, 53, 55).

12. Positionscodierer (11) nach einem der vorstehenden Ansprüche,
wobei mindestens eine der Speichereinheiten (27a, 27b, 27c) ferner ausgestaltet ist, um einen Übergangsmerker (71) als Teil des ausgegebenen vorbestimmten Nachschlagewerts (29, 49, 55, 57) auszugeben, wobei der Übergangsmerker (71) bereitgestellt wird, um anzuzeigen, ob die aktuelle Position des bewegbaren Elements (13, 45) in einer Übergangsregion (72) liegt.

13. Positionscodierer (11) nach Anspruch 12,
wobei die Übergangsregion (72) mindestens eine Position enthält, in welcher mindestens einer der Sensoren (19a, 19b, 19c, 19d, 19e, 19f, 19g) proximal zu einem Übergang von zwei benachbarten Magnetpolen (15,17) des bewegbaren Elements ist, welche entlang einer Ausdehnung des bewegbaren Elements (13, 45) angeordnet sind.

14. Positionscodierer (11) nach Anspruch 12 oder 13,
wobei mindestens eine weitere der Speichereinheiten (27a, 27b, 27c) eine Vielzahl von vorbestimmten Nachschlagewerten (57) enthält,
wobei jeder vorbestimmte Nachschlagewert (57) der weiteren Speichereinheit (27c) einem Positionswert entspricht, welcher einem jeweiligen Paar entspricht aus
- einem ersten Signal (49), das einer Absolutposition des bewegbaren Elements entspricht und einen Übergangsmerker (71) enthält, und
- einem zweiten Signal (55), das einer inkrementellen Position des bewegbaren Elements entspricht,
und einer individuellen Speicheradresse zugeordnet ist, die gebildet wird, indem das erste und zweite Signal (49, 55) des jeweiligen Paars verkettet werden, wobei die weitere Speichereinheit (27c) ausgestaltet ist, um eine Speicheradresse zu empfangen, die gebildet wird, indem das erste und zweite Signal (49, 55) verkettet werden.

15. Positionscodierer (11) nach einem der vorstehenden Ansprüche,
wobei mindestens einer der ausgegebenen Nachschlagewerte (29, 49, 55, 57) tiefpassgefiltert wird
und/oder
wobei jeweilige Auflösungen von Analog/Digital-Wandlern (25a, 25b, 25c, 25d) des Positioncodierers (11) angepasst sind, um sicherzustellen, dass ein Gesamtfehler des Positionswerts, der durch einen ausgegebenen vorbestimmten Nachschlagewert (29, 49, 55, 57) repräsentiert wird, unter einem vorbestimmten Wert liegt.

## Revendications

1. Codeur de position (11), comprenant
- un élément déplaçable (13, 45), et
- au moins un premier capteur (19a, 19c, 19b) et un second capteur (19b, 19e, 19f), l'élément déplaçable (13, 45) étant déplaçable par rapport au premier et au second capteur (19a, 19b, 19c, 19b, 19e, 19b),
le premier capteur (19a, 19c, 19b) étant adapté à capturer une première composante d'une position actuelle de l'élément déplaçable (13, 45) et à délivrer un premier signal (21) correspondant à la première composante,
le second capteur (19b, 19e, 19f) étant adapté à capturer une seconde composante de la position actuelle complémentaire de la première composante et à délivrer un second signal (23) correspondant à la seconde composante,
dans lequel le codeur de position (11) comprend en outre
- au moins une première unité à mémoire (27a) qui retient une pluralité de valeurs de consultation prédéterminées (29, 49),
chaque valeur de consultation prédéterminée (29, 49) représentant une valeur de position qui correspond à un groupe respectif d'au moins un premier signal et un second signal (21, 23) et étant associé à une adresse mémoire individuelle qui est formée par concaténation des signaux (21, 23) du groupe respectif, la première unité à mémoire (27a) étant configurée pour recevoir une adresse mémoire qui est formée par concaténation au moins du premier signal et du second signal (21, 23) délivrés par le premier et le second capteur (19a, 19b, 19c, 19b, 19e, 19f), respectivement, et pour délivrer la valeur de consultation prédéterminée (29, 49) associée à l'adresse mémoire reçue en réponse.

2. Codeur de position (11) selon la revendication 1,
dans lequel le codeur de position (11) comprend en outre
- au moins un troisième capteur et un quatrième capteur (19g),
l'élément déplaçable (13, 45) étant déplaçable par rapport au premier, au second, au troisième et au quatrième capteur (19c, 19b, 19e, 19f, 19g),
le premier capteur (19c, 19b) étant adapté à capturer une première composante d'une position absolue actuelle de l'élément déplaçable (13, 45) et à délivrer un premier signal absolu (21) correspondant à la première composante de la position absolue actuelle,
le second capteur (19e, 19f) étant adapté à capturer une seconde composante de la position absolue actuelle complémentaire de la première composante de la position absolue actuelle et à délivrer un second signal absolu (23) correspondant à la seconde composante de la position absolue actuelle,
le troisième capteur (19g) étant adapté à capturer une première composante d'une position incrémentale actuelle de l'élément déplaçable et à délivrer un premier signal incrémental (51) correspondant à la première composante de la position incrémentale actuelle,
le quatrième capteur (19g) étant adapté à capturer une seconde composante de la position incrémentale actuelle complémentaire de la première composante de la position incrémentale actuelle et à délivrer un second signal incrémental (53) correspondant à la seconde composante de la position incrémentale actuelle,
dans lequel la première unité à mémoire (27a) est configurée pour recevoir une adresse mémoire qui est formée par au moins une des procédures suivantes
- concaténation du premier signal absolu et du second signal absolu (21, 23) délivrés par le premier et le second capteur (19c, 19b, 19e, 19f), respectivement, et
- concaténation du premier signal incrémental et du second signal incrémental (51, 53) délivrés par le troisième et par le quatrième capteur (19g), respectivement.

3. Capteur de position (11) selon la revendication 2,
dans lequel chaque valeur de consultation prédéterminée (49) de la première unité à mémoire (27a) représente une valeur de position qui correspond à un groupe respectif du premier, du second du troisième et du quatrième signal (21, 23, 51, 53) et est associée à une adresse mémoire individuelle qui est formée par concaténation du premier, le second, du troisième et du quatrième signal (21, 23, 51, 53) du groupe respectif, la première unité à mémoire (27a) étant configurée pour recevoir une adresse mémoire qui est formée par concaténation du premier, du second, du troisième et du quatrième signal (21, 23, 51, 53) délivrés par le premier, le second, le troisième et le quatrième capteur (19c, 19b, 19e, 19f, 19g), respectivement, et à délivrer la valeur de consultation prédéterminée (49, 55) associée à l'adresse mémoire reçue en réponse.

4. Codeur de position (11) selon la revendication 2,
dans lequel chaque valeur de consultation prédéterminée (49) de la première unité à mémoire (27a) représente une valeur de position qui correspond à une paire respective du premier et du second signal absolu (21, 23) et est associée à une adresse mémoire individuelle qui est formée par concaténation du premier et du second signal absolu (21, 23) de la paire respective,
dans lequel la première unité à mémoire (27a) est configurée pour recevoir une adresse mémoire qui est formée par concaténation du premier et du second signal absolu (21, 23) délivrés par le premier et par le second capteur (19c, 19b, 19e, 19f), respectivement,
dans lequel le codeur positionnel (11) comprend en outre au moins une seconde unité à mémoire (27b) qui retient une pluralité de valeurs de consultation prédéterminées (55), chaque valeur de consultation prédéterminée (55) représentant une valeur de position qui correspond à une paire respective du premier et du second signal incrémental (51, 53) et étant associée à une adresse mémoire individuelle qui est formée par concaténation du premier et du second signal incrémental (51, 53) de la paire respective,
la seconde unité à mémoire (27b) étant configurée pour recevoir une adresse mémoire qui est formée par concaténation du premier et du second signal incrémental (51, 53) délivrés par le troisième et par le quatrième capteur (19g), respectivement, et pour délivrer la valeur de consultation prédéterminée (55) associée à l'adresse mémoire reçue en réponse.

5. Codeur de position (11) selon la revendication 2,
dans lequel le codeur de position (11) comprend en outre au moins une seconde unité à mémoire (27c) qui retient une pluralité de valeurs de consultation prédéterminées (57),
chaque valeur de consultation prédéterminée (57) représente une valeur de position qui correspond respectivement au triple de la valeur de consultation prédéterminée (49, 55) délivrée par la première unité à mémoire (27a, 27b), et le premier signal et le second signal (21, 23 51, 53) qui ne forment pas l'adresse mémoire reçue par l'unité à mémoire (27a, 27b),
chaque valeur de consultation prédéterminée (57) étant en outre associée à une adresse mémoire individuelle qui est formée par concaténation de la valeur de consultation prédéterminée (49, 55) et du premier et du second signal (21, 23, 51, 53) du triplet respectif,
la seconde unité à mémoire (27c) étant configurée pour recevoir une adresse mémoire qui est formée par concaténation de la valeur de consultation prédéterminée (49, 55) délivrée par la première unité à mémoire (27a, 27b) et du premier et du second signal (21, 23, 51, 53) qui ne forment pas l'adresse mémoire reçue par la première unité à mémoire (27a, 27b) et pour délivrer la valeur de consultation prédéterminée (57) associée à l'adresse mémoire reçue en réponse.

6. Codeur de position (11) selon la revendication 4,
dans lequel le codeur de position (11) comprend en outre
- au moins une troisième unité à mémoire (27c) qui retient une pluralité de valeurs de consultation prédéterminées (57),
chaque valeur de consultation prédéterminée (57) représentant une valeur de position qui correspond à une paire respective de la valeur de consultation prédéterminée (49) délivrée par la première unité à mémoire (27a) et de la valeur de consultation prédéterminée (55) délivrée par la seconde unité à mémoire (27b) et étant associée à une adresse mémoire individuelle qui est formée par concaténation de la valeur de consultation prédéterminée (49) délivrée par la première unité à mémoire (27b) et de la valeur de consultation prédéterminée (55) délivrée par la seconde unité à mémoire (27b) et pour délivrer la valeur de consultation prédéterminée (57) associée à l'adresse mémoire reçue en réponse.

7. Codeur de position (11) selon l'une quelconque des revendications précédentes,
le codeur de position (11) étant configuré comme un codeur rotatif (11), dans lequel l'élément déplaçable (13, 45) est un élément rotatif (13, 45) capable de rotation par rapport à des capteurs respectifs (19a, 19b, 19c, 19b, 19e, 19f, 19g) qui sont adaptés à capturer des composantes respectives de positions angulaires actuelles de l'élément rotatif (13, 45),
et dans lequel chaque valeur de consultation prédéterminée retenue par une unité à mémoire respective (27a, 27b, 27c) représente une valeur angulaire.

8. Codeur de position (11) selon l'une quelconque des revendications précédentes,
dans lequel le premier et le second capteur (19a, 19b, 19c, 19b, 19e, 19f) sont des capteurs magnétiques et l'élément déplaçable (13, 45) comprend un premier élément magnétique (13) ayant un nombre de pôles magnétiques (15, 17) agencés de façon régulière le long d'une extension de l'élément déplaçable (13, 45), en particulier deux pôles magnétiques (15, 17) diamétralement opposés par rapport à un centre de l'élément déplaçable (13, 45),
le premier et le second capteur (19a, 19b, 19c, 19b, 19e, 19f) étant configurés pour coopérer avec le premier élément magnétique (13).

9. Codeur de position (11) selon la revendication 2 ou une combinaison de la revendication 2 avec l'une quelconque des revendications 3 à 8,
dans lequel le troisième et le quatrième capteur (19g) sont des capteurs magnétiques et l'élément déplaçable (13, 45) comprend un second élément magnétique (45) ayant un nombre de pôles magnétiques (15, 17) agencés de façon régulière le long d'une extension de l'élément déplaçable (13, 45), en particulier au moins 8 et/ou jusqu'à 90, de préférence au moins 16 et/ou jusqu'à 72, et de manière encore préférable au moins 32 et/ou jusqu'à 52 pôles magnétiques (15, 17) agencés en alternance le long d'une extension de l'élément déplaçable (13, 45),
le troisième et le quatrième capteur (19g) étant configurés pour coopérer avec le second élément magnétique (45).

10. Codeur de position (11) selon l'une quelconque des revendications précédentes,
dans lequel le codeur de position (11) comprend au moins un convertisseur analogique/numérique (25a, 25b, 25c, 25d) configuré pour recevoir une représentation analogique d'un signal parmi le premier et le second signal (21, 23, 49, 51, 53, 55) et pour délivrer une représentation numérique (21', 23', 51', 53') du signal reçu (21, 23, 49, 51, 53, 55) ; et/ou dans lequel le codeur de position (11) comprend au moins un convertisseur numérique/analogique (41, 59) configuré pour recevoir une représentation numérique de l'une des valeurs de consultation prédéterminées (29, 49, 55, 57) et pour délivrer une représentation analogique de la valeur de consultation reçue (29, 49, 55, 57).

11. Codeur de position (11) selon l'une quelconque des revendications précédentes,
dans lequel l'une au moins des unités à mémoire (27a, 27b, 27c) est en outre configurée pour délivrer un drapeau de tolérance à titre de partie de la valeur de consultation prédéterminée délivrée (29, 49, 55, 57), dans lequel le drapeau de tolérance est fourni pour indiquer si la valeur de consultation prédéterminée délivrée (29, 49, 55, 57) correspond à un groupe de signaux, en particulier à une paire d'un premier et d'un second signal (21, 23, 49, 51, 53, 55) à l'intérieur d'une région de tolérance (33).

12. Codeur de position (11) selon l'une quelconque des revendications précédentes,
dans lequel l'une au moins des unités à mémoire (27a, 27b, 27c) est en outre configurée pour délivrer un drapeau de transition (71) en tant que partie de la valeur de consultation prédéterminée délivrée (29, 49, 55, 57), dans lequel le drapeau de transition (76) est fourni pour indiquer si la position actuelle de l'élément déplaçable (13, 45) est à l'intérieur d'une région de transition (72).

13. Codeur de position (11) selon la revendication 12,
dans lequel la région de transition (72) inclut au moins une position dans laquelle l'un au moins des capteurs (19a, 19b, 19c, 19b, 19 e, 19f, 19g) est proximal par rapport à une transition de deux pôles magnétiques adjacents (15, 17) de l'élément déplaçable, qui sont agencés le long d'une extension de l'élément déplaçable (13, 45).

14. Codeur de position (11) selon la revendication 12 ou 13,
dans lequel au moins une autre des unités à mémoire (27a, 27b, 27c) retient une pluralité de valeurs de consultation prédéterminées (57),
chaque valeur de consultation prédéterminée (57) de l'autre unité à mémoire (27c) représente une valeur de position qui correspond à une paire respective :
- d'un premier signal (49) correspondant à une position absolue de l'élément déplaçable et incluant un drapeau de transition (71), et
- d'un second signal (55) correspondant à une position incrémentale de l'élément déplaçable,
et étant associée à une adresse mémoire individuelle qui est formée par concaténation du premier et du second signal (49, 55) de la paire respective, l'autre unité à mémoire (27c) étant configurée pour recevoir une adresse mémoire qui est formée par concaténation du premier et du second signal (49, 55).

15. Codeur de position (11) selon l'une quelconque des revendications précédentes,
dans lequel l'une au moins des valeurs de consultation délivrées (29, 49, 55, 57) est filtrée à travers un filtre passe-bas
et/ou
dans lequel des résolutions respectives des convertisseurs analogique/numérique (25a, 25b, 25c, 25d) du codeur de position (11) sont adaptés pour assurer qu'une erreur globale de la valeur de position représentée par une valeur de consultation prédéterminée délivrée (29, 49, 55, 57) sera au-dessous d'une valeur prédéterminée.
